# EUROPEAN PATENT SPECIFICATION

(11) **EP 1 297 018 B1**
(45) Date of publication and mention of the grant of the patent: **26.04.2006**
(21) Application number: 01943183.2
(22) Date of filing: 20.06.2001
(51) Int. Cl.: C08B 30/04, C12P 19/04

(54) **STEEPING PROCESS**
VERFAHREN ZUM QUELLEN
PROCEDE DE TREMPAGE

(30) Priority: 23.06.2000 DK 200000982; 29.06.2000 US 214909 P; 25.08.2000 DK 200001263; 06.09.2000 US 230602 P
(43) Date of publication of application: 02.04.2003
(73) Proprietor: Novozymes A/S, 2880 Bagsvaerd (DK)
(72) Inventor: OLSEN, Hans, Sejr, DK-Holte 2840 (DK); NIELSEN, Bjarne, Roenfeldt, DK-2830 Virum (DK)
(86) International application number: PCT/DK2001/000429
(87) International publication number: WO 2002/000910

(56) References cited:
- EP-A- 0 848 014
- WO-A-97/35016
- WO-A-98/22613
- GB-A- 2 115 820
- US-A- 4 478 939
- J D STEINKE ET AL: "Steeping Maize in the Presence of Multiple Enzymes I. Static Batchwise Steeping" CEREAL CHEM., vol. 68, no. 1, 1991, pages 7-12, XP002902043

## Description

The present invention relates to an improved steeping process constituting the first step in the milling process of corn kernels and other crop kernels preparing starch to be suitable for the conversion of starch into mono- di-, oligo-saccharides, ethanol and sweeteners.

Further the invention also relates to an enzyme composition comprising a cell wall degrading activity for use in a steeping process.

Before starch - being an important constituent in the kernels of most crops, such as corn, wheat, rice, sorghum bean, barley or fruit hulls - can be used for conversion of starch into saccharides, such as dextrose, fructose; alcohols, such as ethanol: and sweeteners, the starch must be made available and treated in an manner to provide a high purity starch. If starch contains more than 0.5% impurities, including proteins, it is not suitable as starting material for starch conversion processes. To provide such pure starch product staring out from the kernels of crops the kernels are often milled, as will be described further below.

### The Composition of Corn Kernels

Corn kernels, such as the yellow dent corn kernel, have an outer covering referred to as the "Pericarp" that protects the germ in the kernels. It resists water and water vapour and is undesirable to insects and microorganisms.

The only area of the kernels not covered by the "Pericarp" is the "Tip Cap", which is the attachment point of the kernel to the cob.

The "Germ" is the only living part of the corn kernel. It contains the essential genetic information, enzymes, vitamins, and minerals for the kernel to grow into a corn plant. About 25 percent of the germ is corn oil. The endosperm covered surrounded by the germ comprises about 82 percent of the kernel dry weight and is the source of energy (starch) and protein for the germinating seed. There are two types of endosperm, soft and hard. In the hard endosperm, starch is packed tightly together. In the soft endosperm, the starch is loose.

### Wet milling

Wet milling is often used for separating corn kernels into its four basic components: starch, germ, fiber and protein.

Typically wet milling processes comprise four basic steps. First the kernels are steeped for 30 to 48 hours to begin breaking the starch and protein bonds. The next step in the process involves a coarse grind to separate the germ from the rest of the kernel. The remaining slurry consisting of fiber, starch and protein is finely ground and screened to separate the fiber from the starch and protein. The starch is separated from the remaining slurry in hydrocyclones. The starch then can be converted to syrup or alcohol.

Today enzymes are not commonly used for the first step in the wet milling process namely the steeping step, wherein the kernels are softened. However, the use of enzymes for the steeping step has been suggested. The enzyme Steepzyme® (available from Novozymes A/S) have been shown suitable for steeping of corn. However, there is a need for further improvement of enzyme compositions for steeping.

More specifically it is the object of the invention to provide an improved steeping process.

### BRIEF DESCRIPTION OF THE DRAWINGS

Figure 1 shows a corn wet milling process,
Figure 2 shows the processes used in a corn steeping plant in a schematic form.

The object of the present invention is to improve the steeping process step of wet milling processes, where kernels of crops, such as especially corn, are separated into the four main constituents: starch, germ, fiber and protein.

### The Milling Process

The kernels are milled in order to open up the structure and to allow further processing. Two processes are used: wet or dry milling. In dry milling processes the whole kernels are milled and used in the remaining part of the process. Wet milling gives a very good separation of germ and meal (starch granules and protein) and is often applied at locations where there is a parallel production of syrups.

### Degradation of crops into starch suitable for conversion

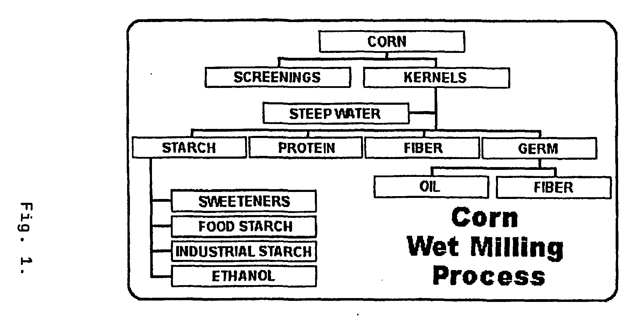

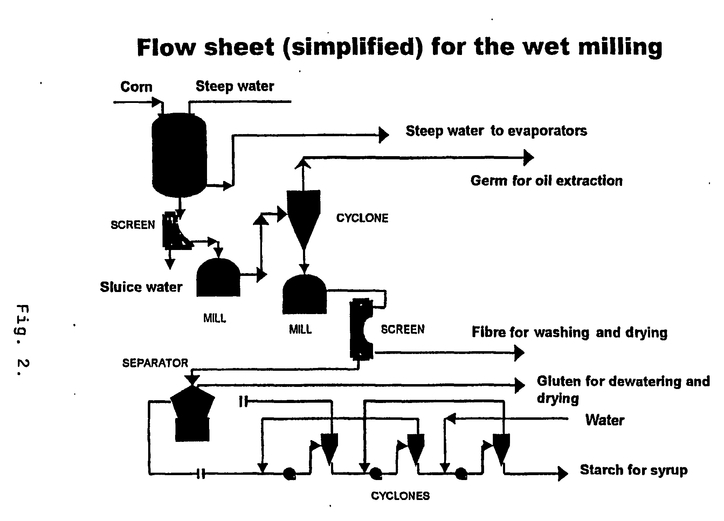

Degradation of the kernels of corn (see also Fig. 1 and Fig. 2) and other crop kernels into starch suitable for conversion of starch into mono-, di-, oligo saccharides, ethanol and sweeteners consists of four steps:
1. Steeping and germ separation,
2. Fiber washing and drying,
3. Starch gluten separation,
4. Starch washing.

### 1. Steeping and germ separation

Corn kernels are softened by soaking in water for between 30 and 48 hours at a temperature about 50°C. During steeping, the kernels absorb water, increasing their moisture levels from 15 percent to 45 percent and more than doubling in size. The addition of 0.1% sulfur dioxide (SO₂) and/or NaHSO₃ to the water prevents excessive bacteria growth in the warm environment. As the corn swells and softens, the mild acidity of the steepwater begins to loosen the gluten bonds within the corn and release the starch. After the corn kernels are steeped they are cracked open to release the germ. The germ contains the valuable corn oil. The germ is separated from the heavier density mixture of starch, hulls and fiber essentially by "floating" the germ segment free of the other substances under closely controlled conditions. This method serves to eliminate any adverse effect of traces of corn oil in later processing steps.

### 2. Fiber washing and drying

To get maximum starch recovery, while keeping any fiber in the final product to an absolute minimum, it is necessary to wash the free starch from the fiber during processing. The fiber is collected, slurried and screened to reclaim any residual starch or protein.

### 3. Starch separation

The starch-gluten suspension from the fiber-washing step, called mill starch, is separated into starch and gluten. Gluten has a low density compared to starch. By passing mill starch through a centrifuge, the gluten is readily spun out.

### 4. Starch washing.

The starch slurry from the starch separation step contains some insoluble protein and much of solubles. They have to be removed before a top quality starch (high purity starch) can be made. The starch, with just one or two percent protein remaining, is diluted, washed 8 to 14 times, re-diluted and washed again in hydrocyclones to remove the last trace of protein and produce high quality starch, typically more than 99.5 percent pure.

### Process Of The Invention

The inventors of the present invention have surprisingly found that selected enzyme activities and combinations thereof may be used to improve steeping of kernels of crops, in particular corn. The steeping time may be reduced to between 1 and 48 hours, preferably 3-40 hours, in particular 5-24 hours and consequently less energy is used. Other advantages may be that the amount of chemicals, such as SO₂ and NaHSO₃, which need to be used, may be reduced or even fully removed. Further, the final starch yields may also be increased.

The invention relates to a process of steeping crop kernels, comprising soaking the kernels in water for 1-48 hours, in the presence of a xylanase, a cellulase, an arabinofuranosidase and an acidic protease, wherein the acidic protease is added in an amount of 3000 - 6000 HUT / 100g kernels in an effective amount.

The cellulase may be added in an amount of 1-1,000 NCU, preferably 170-900 NCU, especially 200 to 800 NCU per 100 g DS kernels.

The xylanase may be added in an amount of 1-100 FXU, preferably 5-90 FXU, especially 10 to 80 FXU per 100 g DS kernels.

Additionally one or more of the following enzyme activities may be added or present during steeping in effective amounts: endoglucanase, beta-glucanase, pentosanase, pectinase, arabinase and xylaglucanase.

In an embodiment the invention relates to a steeping process comprising soaking the kernels in the presence of an effective amount of lipolytic enzyme for 1-48 hours.

The term "lipolytic enzyme" includes enzymes with lipase and/or cutinase activity.

The lipolytic enzyme is normally added or present in an amount of 0.001-1% lipolytic enzyme protein/100 g DS kernels.

It is believed that the enzyme(s) penetrate(s) into the kernels, causing a degradation of the internal cell wall and the protein matrix of the whole kernel. Thereby the starch is washed out more easily in the subsequent steps.

The steeping process of the invention may be performed at a temperature in the range between 40 and 60°C, preferably around 50°C.

In an embodiment the steeping is performed in the presence of 0.01-1%, preferably 0.05-0.3%, especially 0.1-0.2% SO₂ and/or NaHSO₃.

When using the term "kernels" it is intended to include kernels from corn (maize), rice, barley, sorghum bean, or fruit hulls, or wheat.

The above enzyme activities may be any of the below mentioned

In a preferred embodiment xylanase and/or cellulase and/or arabinofuranosidase and/or acidic protease is derived from the genus *Aspergillus,* preferably *A. aculeatus,* especially A. *aculeatus* CBS 101.43.

In a preferred embodiment any of the processes of the invention are performed in the presence of steepzyme® enriched with acidic protease activity.
Especially preferred are processes performed in the presence of the acidic protease I derived from A. *aculeatus* CBS 101.43 in an effective amount.
The kernels are subjected to the 0.01-1%, preferably 0.05-0.2%, especially 0.1% (w/w) of the kernels Steepzyme® enriched to provide a total HUT/100 g DS kernels from 4,000-20,000 HUT/100 g DS kernels acidic protease, preferably 5,000-10,000 HUT/100g, especially from 6,000-16,500 HUT/g DS kernels.
In a preferred embodiment the acidic protease is an aspartic protease, such as an aspartic protease derived from a strain of *Aspergillus,* in particular *A. aculeatus,* especially *A. aculeatus* CBD 101.43.

Preferred are aspartic proteases, which retain activity in the presence of an inhibitor selected from the group consisting of pepstatin® , Pefabloc® , PMSF, or EDTA. Protease I derived from A. *aculeatus* CBS 101.43 is such acidic protease.

In the context of the present invention, the term "enriched" is intended to indicate that the enzyme activity in question of the enzyme preparation has been increased, e.g., with an enrichment factor of at least 1.1, conveniently due to addition of a recombinant mono-component enzyme.
The below enzyme may also be used according to the invention.

### Acidic Proteases

Suitable acidic proteases include fungal and bacterial proteases, i.e., proteases characterized by the ability to hydrolyze proteins under acidic conditions below pH 7.

Suitable acid fungal proteases include fungal proteases derived from *Aspergillus, Mucor, Rhizopus, Candida, Coriolus, Endothia, Enthomophtra, Irpex, Penicillium, Sclerotium* and *Torulopsis.* Especially contemplated are proteases derived from *Aspergillus niger (see, e.g., Koaze et al . , (1964), Agr. Biol . Chem. Japan, 28, 216), Aspergillus saitoi (see, e.g., Yoshida, (1954) J. Agr. Chem*. *Soc. Japan, 28, 66), Aspergillus awamori* (Hayashida et al., (1977) Agric. Biol. Chem., 42(5), 927-933, *Aspergillus aculeatus* (WO 95/02044), or *Aspergillus oryzae*; and acidic proteases from *Mucor pusillus* or *Mucor miehei.*

In an embodiment the acidic protease is a protease clomplex from *A. oryzae* sold under the tradename Flavourzyme® (from Nbvozymes A/S) or an aspartic protease from *Rhizomucor miehei* or Spezyme® FAN or GC 106 from Genencor Int.

### Xylanases

The xylanase activity may be derived from any suitable organism, including fungal and bacterial organisms, such as *Aspergillus, Disporotrichum. Penicillium, Neurospora, Fusarium* and *Trichoderma*.
Examples of suitable xylanases include xylanases derived from *H. insolens* (WO 92/17573; *Aspergillus tubigensis* (WO 92/01793) ; *A. niger* (Shei et al., 1985, Biotech. and Bioeng. Vol. XXVII, pp. 533-538, and Fournier et al., 1985, Biotech. Bioeng. Vol. XXVII, pp. 539-546; WO 91/19782 and EP 463 706); *A. aculeatus* (WO 94/21785).
In a specific embodiment the xylanase is Xylanase II disclosed in WO 94/21785.

Contemplated commercially available xylanase include Shearzyme®, Biofeed wheat® (from Novozymes A/S) and Spezyme® CP (from Genencor Int.).

### Cellulases

The cellulase may be of microbial origin, such as derivable from a strain of a filamentous fungus (e.g., *Aspergillus, Trichoderma, Humicola, Fusarium).* Specific examples of cellulases include the endo-glucanase (endo-glucanase I) obtainable from *H. insolens* and further defined by the amino acid sequence of fig. 14 in WO 91/17244 and the 43 kD *H. insolens* endoglucanase described in WO 91/17243.

Commercially available cellulase which may be used include Celluclast®, Celluzyme® (available from Novozymes A/S), Spezyme® CP (available from Genencor Int.) and Rohament® 7069 W (available from Röhm, Germany) .

### Arabinofuranosidases

Examples of contemplated arabinofuranosidases include A. niger alpha-L-arabinofuranosidase A and B disclosed in WO 97/42301; the *Aspergillus* sp. arabinofuranosidase disclosed in EP 871,745; the *Aspergillus niger* K1 alpha-L-arabinofuranosidase disclosed in DD 143925.

### Lipolytic enzymes

It is believed that lipases and/or cutinases are capable of degrading the tip cap of the kernels and this way speed up the soaking and thus the steep process.

### Cutinases

Cutinases are known from various fungi (P.E. Kolattukudy in "Lipases", Ed. B. Borgström and H.L. Brockman, Elsevier 1984, 471-504). The *Fusarium solani pisi* cutinase has been described in S. Longhi et al., Journal of Molecular Biology, 268 (4), 779-799 (1997)) and WO 90/09446).

The amino acid sequence of a cutinase from *Humicola insolens* has also been published (US 5,827,719). The *H. insolens* strain DSM 1800 cutinase is shown as SEQ ID NO: 2 and SEQ ID NO: 1 of US 5,827,719. The *F. solani pisi* cutinase is shown as the mature peptide in Fig. 1D of WO 94/14964. A *Pseudomonas mendocina* cutinase is described in WO 88/09367. A number of variants of the cutinase of *Fusarium solani pisi* have been published: WO 94/14963; WO 94/14964; WO 00/05389; Appl. Environm. Microbiol. 64, 2794-2799, 1998; Proteins: Structure, Function and Genetics 26, 442-458, 1996; J. of Computational Chemistry 17, 1783-1803, 1996; Protein Engineering 6, 157-165, 1993; Proteins: Structure, Function, and Genetics 33, 253-264, 1998; J. of Biotechnology 66, 11-26, 1998; Biochemistry 35, 398-410, 1996; Chemistry and Physics of Lipids 97, 181-191, 1999; Proteins: Structure, Function, and Genetics 31, 320-333, 1998; Biochimica et Biophysica Acta 1441, 185-196, 1999; Appl. Environm. Microbiol. 64, 316-324, 1998; BioTechniques 27, 1102-1108, 1999.

Preferred cutinases are: *Fusarium* solani pissi cutinase, *Humicola insolens* cutinase and thermostable mutants of *Humicola insolens-* cutinase JCO39, JCO456, JCO492; FL34; *Aspergillus oryzae* cutinase.

### Lipases

Examples of lipases include a *Humicola lanuginosa* lipase, *e.g.*, described in EP 258 068 and EP 305 216, a *Rhizomucor miehei* lipase, *e.g.* as described in EP 238 023, *Absidia* sp. lipolytic enzymes (WO 96/13578), a *Candida* lipase, such as a *C. antarctica* lipase, *e. g.*, the *C. antarctica* lipase A or B described in EP 214 761, a *Pseudomonas* lipase such as a *P. alcaligenes* and *P. pseudoalcaligenes* lipase, *e.g.* as described in EP 218 272, a *P. cepacia* lipase, *e.g,* as described in EP 331 376, a *Pseudomonas* sp. lipase as disclosed in WO95/14783, a *Bacillus* lipase, *e.g.* a *B. subtilis* lipase (Dartois et al., (1993) Biochemica et Biophysica acta 1131, 253-260), a *B. stearothermophilus lipase (JP 64*/*744992)* and a *B. pumilus lipase (WO* 91/16422) .

Furthermore, a number of cloned lipases have been described, including the *Penicillium camembertii* lipase described by Yamaguchi et al. , (1991), Gene 103, 61-67), the *Geotricum candidum* lipase (Schimada, Y. et al., (1989), J. Biochem., 106, 383-388), and various *Rhizopus* lipases such as a *R. delemar* lipase (Hass, M.J et al., (1991), Gene 109, 117-113) a *R. niveus* lipase (Kugimiya et al., (1992), Biosci. Biotech. Biochem. 56, 716-719) and a *R. oryzae* lipase.

Preferred lipases include the Humicola lanuginose lipase and variants thereof, such as *Humicola lanuginose* lipase variant HL1232, and the *Fusarium oxysporum* lipase.

### Steeping composition

The invention also relates to an enzyme composition.

An object of the invention is to provide a composition suitable for steeping comprising xylanase, cellulase, arabinofuranosidase and acidic protease activity, wherein the composition comprises more than 3 740 HUT/g.

In an embodiment the composition comprise xylanase and acidic protease activity. The composition may further comprise arabinofuranosidase and/or cellulase activity.

In another embodiment the composition of the invention comprises cellulase and acidic protease activity. The composition may further comprise arabinofuranosidase and/or xylanase activity.

In a further embodiment the composition of the invention comprises arabinofuranosidase and acidic protease activity. The composition may further comprise cellulase and/or xylanase activity.

In preferred embodiment the composition of the invention is Steepzyme® (available from Novozymes A/S) enriched with an acidic protease. The composition may comprise more than 3740 HUT/g enzyme, more than 45 FXU/g, more than 1694 NCU/g.

### Preparation of Steepzyme®

Steepzyme® is a liquid plant cell wall degrading enzyme preparation prepared from *Aspergillus aculeatus* CBS 101.43, publicly available from the Centraalbureau voor Schimmelcultures, Delft, NL. Steepzyme® comprises a number of enzyme activities, including endoglucanase activity (about 585 EGA/g); fungal beta-glucanase activity (about 187 FBG/g); Fungal xylanase activity (45 FXU/g); acidic protease activity (3,740 HUT/g); cellulase 1,694/g); pentosanase activity (77 PTU/g); pectinase activity (18,700 PSU/g). The production of the Steepzyme® enzyme mixture is described in US patent no. 4,478,939.

The steeping enzyme composition of the invention may in an embodiment comprise one or more of the above mentioned mono-components activities constituting Steepzyme® enriched with a dosage of more than 3740 FXU/g acidic protease activity (3740 HUT/g is the HUT/g activity of Steepzyme®); preferably enriched with between 1 and 20,000 HUT/g, more preferred 500 and 16,000 HUT/g, even more preferred 6,000 to 16,000 HUT/g acidic protease activity.

### Use of a Composition of the invention

A composition of the invention may be used for steeping crops, including corn, by addition to the steepwater in an effective amount. In an embodiment the composition of the invention may be used in connection with carrying out the process of the invention by addition to the steepwater in a concentration of 0.1% Steepzyme® enriched with acidic protease so that the steepwater comprises a total of from 4,000-20,000 HUT/100 g DS corn or kernels of other crops. In a preferred embodiment the steepwater comprises in the range of between 500-16,000 HUT/100 g DS corn, especially in the range between 6,500-10,000 HUT/100 g DS corn in the steepwater.

### MATERIALS & METHODS

### Enzymes:

Steepzyme®: multi activity enzyme complex derived from A. aculeatus 101.43(is available from Novozymes A/S on request)
Shearzyme®: *A. aculeatus.* CBS 101.43 xylanase II disclosed in WO 94/21785 (is available from Novozymes A/S)
Flavourzyme®: multi proteolytic activity enzyme complex derived from *A. oryzae* (is available from Novozymes A/S)
Protease I: acidic protease from *Aspergillus aculeatus* CBS 101.43 (disclosed in WO 95/02044)

### METHODS

### Determination of protease HUT activity:

The HUT activity was determined according to the AF92/2 method published by Novozymes A/S, Denmark. 1 HUT is the amount of enzyme which, at 40°C and pH 4.7 over 30 minutes forms a hydrolysate from digesting denatured hemoglobin equivalent in absorbancy at 275 nm to a solution of 1.10 µg/ml tyrosine in 0.006 N HCl which absorbancy is 0.0084. The denatured hemoglobin substrate is digested by the enzyme in a 0.5 M acetate buffer at the given conditions. Undigested hemoglobin is precipitated with trichloroacetic acid and the absorbance at 275 nm is measured of the hydrolysate in the supernatant.

### Determination of xylanase activity (FXU)

The endo-xylanase activity is determined by an assay, in which the xylanase sample is incubated with a remazol-xylan substrate (4-O-methyl-D-glucurono-D-xylan dyed with Remazol Brilliant Blue R, Fluka), pH 6.0. The incubation is performed at 50°C for 30 min. The background of non-degraded dyed substrate is precipitated by ethanol. The remaining blue colour in the supernatant is determined spectrophotometrically at 585 nm and is proportional to the endoxylanase activity.
The endoxylanase activity of the sample is determined relatively to an enzyme standard.

The assay is further described in the publication AF 293.6/1-GB, available upon request from Novozymes A/S, Denmark.

### Determination of Endo-Glucanase Units (ECU)

The ECU (endocellulose unit) is determined relatively to an enzyme standard.

Endocellulase decomposes carboxylmethylcellulose, CMC. The resulting reduction in viscosity is determined by a CMC-vibration Viscosimeter (e.g. MIVI 3000 available from Sofraser, France).

The prepared substrate solution contain 35 g/l CMC (Blanose Aqualon) in 0.1 M.phosphate buffer at pH 7.5. The enzyme sample to be analyzed is determined is dissolved in the same buffer.

0.15 ml standard enzyme solution or the unknown enzyme sample is placed in 10 ml test tubes. 5 ml CMC-substrate solution, preheated to 40°C, is added. The joint solution is mixed thoroughly, incubated for 30 minutes and placed in the viscometer.

The method is further described in AF302/1-GB available from Novozymes A/S upon request.

### Determination of endo-glucanase activity (EGU)

The fermentation broths are analyzed by vibration viscosimetry on CMC at pH 6.0. More specifically, a substrate solution containing 34.0 g/l CMC (Blanose Aqualon) in 0.1 M phosphate buffer, pH 6.0 is prepared. The enzyme sample to be analyzed is dissolved in the same buffer. 14 ml substrate solution and 0.5 ml enzyme solution are mixed and transferred to a vibration viscosimeter (e.g. MIVI 3000 available from Sofraser, France) thermostated at 40°C. Endoglucanase unit (EGU) is determined as the ratio between the viscosity of the sample and the viscosity of a standard enzyme solution.

### Cellulytic Activity

The cellulytic activity is determined with carboxymethyl cellulose (CMC) as substrate.

One Novo Cellulase Unit (NCU) is defined as the amount of enzyme which, under standard conditions (i.e. at pH 4.80; 0.1 M acetate buffer; 10 g/l Hercules CMC type 7 LFD as substrate; an incubation temp. of 40.0°C; an incubation time of 20 min; and an enzyme concentration of approximately 0.041 NCU/ml) forms an amount of reducing carbohydrates equivalent to 1 micro mol glucose per minute. A folder AF 187.2/1 describing this analytical method in more detail is available upon request to Novozymes A/S, Denmark.

### Arabinofuranosidase assay

The synthetic substrate p-nitrophenyl alpha-L-arabinofuranoside (SIGMA) is used as substate. Following cleavage of the enzyme, the p-nitrophenyl molecule is liberated and the development in yellow colour can be measured by visible spectrometry at 405 nm.

Stock solution: 1 mg/ml p-nitrophenyl alpha-L-arabinofuranoside in DMSO.

Substrate solution: 0.2 mg/ml p-nitrophenyl alpha-L-arabinofuranoside diluted in 50 mM Sodium acetate, pH 4.5.

Procedure: 100 microlitre enzyme and 100 microlitre is mixed in a 96-well plate and the development of yellow colour due to the enzymatic reaction is measured from 0 to 15 minutes at 405 nm. The slope of the time dependent OD405 curve is directly proportional to the amount of alpha-arabinofuranosidase.

### Lipase (cutinase) activity (LU)

A substrate for lipase is prepared by emulsifying tributyrin (glycerin tributyrate) using gum Arabic as emulsifier. The hydrolysis of tributyrin at 30 °C at pH 7 is followed in a pH-stat titration experiment. One unit of lipase activity (1 LU) equals the amount of enzyme capable of releasing 1 micro mol butyric acid/min at the standard conditions.

### Example 1

### Steeping trials:

The 100 g scale steeping procedure described by Eckhoff SR et.al. in Cereal Chemistry, 73 (1) 54-57 1996 has been used. The enzymes tested were Steepzyme®; and Steepzyme® + Protease I.

The steeping temperature was 50°C, the pH was pH=4-5. The SO₂ dosage was kept on 0.1 %. Steeping time should be 24 hours for the samples including a blank. The enzyme was added after 2 or 3 hours, when pH is in the interval of 4 to 5.

### Results:

The 100 g steeping trials have shown that the starch yields improved by use of Steepzyme®+ Protease I at both 12 hours and 24 hours steeping time. Furthermore the gluten yields improved by enzymatic steepings. There were indications that the main enzyme effects were during the milling and separation steps. Dosage response trials showed that the steeping time could be reduced from 48 hours (classical steeping) to about 12 hours.

## Claims

1. A process of steeping crop Kernels, comprising soaking the kernels in water for 1-48 hours, in the presence of a xylanase, a cellulase, an arabinofuranosidase and an acidic protease in an effective amount, wherein the acidic protease is added in an amount of 3.000-6,000 HUT/100 g DS kernels.

2. The process of claim 1, wherein further one or more of the following enzyme activities are added: endoglucanase, beta-glucanase, pentosanase, pectinase, arabinanase, xyloglucanase, lipase or cutinase.

3. The process of claims 1 or 2, wherein the steeping is carried out at a temperature between 40 and 60°C.

4. The process of claims 1-3, wherein the process is performed in the presence of 0.01-1% SO₂ and/or NaHSO₃.

5. The process of claims 1-4, wherein the crop kernels are from corn, rice, barley, sorghum bean, fruit hulls, or wheat.

6. The process of claims 1-5, wherein the xylanase, and/or cellulase and/or arabinofuranosidase and/or acidic protease is derived from the genus *Aspeigillus.*

7. A composition comprising xylanase, cellulase, arabinofuranosidase and acidic protease activity, wherein the composition comprises more than 3740 HUT/g.

## Patentansprüche

1. Verfahren zum Quellen von Kulturpflanzensamen, umfassend das Einweichen der Samen in Wasser für 1-48 Stunden, in Gegenwart einer Xylanase, einer Cellulase, einer Arabinofuranosidase und einer sauren Protease in einer wirksamen Menge, wobei die saure Protease in einer Menge von 3.000 bis 6.000 HUT/100 g DS Samen zugefügt wird.

2. Verfahren nach Anspruch 1, wobei weiterhin eine oder mehrere der folgenden Enzymaktivitäten zugefügt werden: Endoglucanase, Beta-Glucanase, Pentosanase, Pectinase, Arabinase, Xyloglucanase, Lipase oder Cutinase.

3. Verfahren nach den Ansprüchen 1 oder 2, wobei das Quellen bei einer Temperatur zwischen 40 und 60° C durchgeführt wird.

4. Verfahren nach den Ansprüchen 1-3, wobei das Verfahren in Gegenwart von 0,01-1 % SO₂ und/oder NaHSO₃ durchgeführt wird.

5. Verfahren nach den Ansprüchen 1-4, wobei die Kulturpflanzensamen von Mais, Reis, Gerste, Hirse Bohnen, Fruchtschalen, oder Weizen sind.

6. Verfahren nach den Ansprüchen 1-5, wobei die Xylanase und/oder Cellulase und/oder Arabinofuranosidase und/oder saure Protease von der Gattung *Aspergillus* stammen.

7. Zusammensetzung umfassend Xylanase-, Cellulase-, Arabinofuranosidase- und saure Protease-Aktivität, wobei die Zusammensetzung mehr als 3.740 HUT/g umfasst.

## Revendications

1. Procédé pour le trempage de graines de produits de récolte, comprenant l'imbibation desditcs graines dans l'eau pendant 1 - 48 heures, en présence d'une quantité efficace d'une xylanase, d'une cellulase, d'une arabinofuranosidase et d'une protéase acide, dans lequel la protéase acide est ajoutée dans une quantité de 3000 - 6000 HUT/100 g de graines DS.

2. Procédé selon la revendication 1, dans lequel on ajoute encore une ou plusieurs des activités enzymatiques suivantes :
endoglucanase, bêta-glucanase, pentosanase, pectinase, arabinanase, xyloglucanase, lipase ou cutinase.

3. Procédé selon les revendications 1 ou 2, dans lequel le trempage s'effectue à une température entre 40 et 60 °C

4. Procédé selon les revendications 1-3, dans lequel le procédé est effectué en présence de 0,01 -1% de SO₂ et/ou NaHSO₃.

5. Procédé selon les revendications 1 - 4, dans lequel les graines de produits de récoltes sont des graines de maïs, riz, avoine, graines de sorgho, cosses de fruits, ou de blé.

6. Procédé selon les revendications 1- 5, dans lequel la xylanase et/ou la cellulase et/ou l'arrabinofuranosidase et/ou la protéase acide sont dérivées du genre Aspergillus.

7. Composition comprenant l'activité xylanase, cellulase, arabinofuranosidase et protéase acide, dans laquelle la composition comprend plus de 3740 HUT/g.
